(19) Europäisches Patentamt
European Patent Office
Office européen des brevets

(11) EP 0 571 977 B1

(12) **EUROPEAN PATENT SPECIFICATION**

(45) Date of publication and mention of the grant of the patent:
**19.08.1998 Bulletin 1998/34**

(51) Int Cl.[6]: **C09D 7/12**, B05D 7/26

(21) Application number: **93108500.5**

(22) Date of filing: **26.05.1993**

(54) **Method of applying a coating composition having improved intercoat adhesion**

Beschichtungsverfahren mit verbesserter Zwischenhaftung

Procédé d'application d'une composition de revêtement avec une adhésion intermédiaire améliorée

(84) Designated Contracting States:
**DE FR GB**

(30) Priority: **26.05.1992 JP 133380/92**

(43) Date of publication of application:
**01.12.1993 Bulletin 1993/48**

(73) Proprietor: **Nippon Paint Co., Ltd.**
**Osaka-shi Osaka-fu (JP)**

(72) Inventors:
- **Shiraga, Ryuichi**
  **Suita-shi, Osaka-fu (JP)**
- **Takeuchi, Kunihiko**
  **Minou-shi, Osaka-fu (JP)**
- **Umeda, Shinichirou**
  **Kyoto-shi, Kyoto-fu (JP)**
- **Yoshioka, Manabu**
  **Daito-shi, Osaka-fu (JP)**
- **Miwa, Hiroshi**
  **Ibaraki-shi, Osaka-fu (JP)**

(74) Representative:
**Hansen, Bernd, Dr. Dipl.-Chem. et al**
**Hoffmann Eitle,**
**Patent- und Rechtsanwälte,**
**Postfach 81 04 20**
**81904 München (DE)**

(56) References cited:
**EP-A- 0 393 579**
**EP-A- 0 548 690**
**US-A- 3 992 338**
**US-A- 5 147 453**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Jouve, 75001 PARIS (FR)

## Description

### FIELD OF THE INVENTION

The present invention relates to a coating composition having improved intercoat adhesion with an under coat, its use and a multi-layer coat.

### BACKGROUND OF THE INVENTION

In order to protect a metal from corrosion and keep its appearance, formation of a multi-layer coating composite (typically, formed by a coating composition for automobiles) is required on a substrate. In other words, a coating composition having different compositional ingredients and performances is often applied on an under coating layer. In this case, peeling of the coating layer often occurs due to deterioration of the adhesion between the under coating layer and the coating layer thereon. In order to improve the adhesion with the under coating layer, there can be often used a method wherein the under coating layer is sanded. However, workability becomes inferior because the method includes the sanding step.

Further, in the coating process of automobiles, there can be generally used a method which comprises applying a thermosetting color base coating composition, applying thereon a thermosetting clear coating composition (hereinafter, merely referred to as "clear coating composition") without baking the thermosetting color base coating composition (so-called "wet-on-wet") and then baking to cure a color base coat layer and a clear coat layer, simultaneously (particularly, this method is referred to as "two coat-one bake system). If some defects occur in the coating surface produced by the "two coat-one bake system", it is proposed that the coating surface is sanded and then again coated with the same "two coat-one bake system. However, in practical automobile coating lines, if some defects occur in the coating surface obtained by the" two coat-one bake system", without sanding the coating surface, the color base coating composition and the clear coating composition are further applied by "two coat-one bake system" on the coating surface having the defects.

Thus, a coating composite as shown in Fig. 1 is formed. In the actual application, since the base coating composition is different in compositional ingredients from the clear coating composition, the adhesion between a first clear coating layer and a second base coating layer is inferior and peeling of the coat often occurs.

In order to improve the adhesion, a phosphate compound has been proposed to be contained in the coating composition. For example, in U.S. Patent No. 4,971,841, a phosphoric acid or alkylbenzenesulfonic acid is used for this purpose. However, an alkyl group bonded to the phosphoric acid or alkylbenzenesulfonic acid has 1 to 12 carbon atoms and, further, adhesion to the under coating layer surface is not necessarily sufficient. The phosphoric acid used in the reference is a free phosphoric acid and is different from a phosphate used in the present invention. In addition, the present invention includes no aromatic in a sulfonic compound.

In U.S. Patent No. 4,772,289, a phosphate having a polyether chain is used in order to improve adhesion with leather articles. However, the adhesion with the under coating surface is not necessarily sufficient and defects of durability due to ether is arisen.

In U.S. Patent Nos. 4,839,403 and 4,801,628, it is proposed that a phosphoric acid ester having a hydroxyl group prepared from phosphoric acid and an epoxy compound is used for improving adhesion. When this compound is used, adhesion to the metal surface is improved, however, adhesion with a coated surface is not necessarily sufficient.

EP-A-0548690, which constitutes prior art only according to Article 54(3) EPC, discloses a method for producing a coating which comprises the steps of:

A) coating at least one layer on an article with a cross-linkable polymer coating composition, said composition being substantially free of strong acid,

B) coating at least one clearcoat layer above the layer from step A) with a coating composition comprising

1) a polymer comprising a hydroxy functional group, and
2) a blocked isocyanate cross-linking agent, and

C) curing the coatings.

EP-A-0393579 describes a resin composition for coating purposes which contains an acrylic resin, a cross-linking agent and di-dodecylbenzene sulfonic acid.

## OBJECTS OF THE INVENTION

One object of the invention is to provide process for forming a coating composite on a substrate.

This object as well as other objects and advantages of the present invention will become apparent to those skilled in the art from the following description.

## BRIEF EXPLANATION OF DRAWING

Fig. 1 is a schematic sectional view which illustrates a multi-layer coating composite for both prior art and the present invention.

## SUMMARY OF THE INVENTION

According to the present invention, there is provided a process for forming a coating composite on a substrate comprising the steps of:

forming on the substrate a cured film composed of a first base coat layer and a first clear coat layer formed on the first base coat layer,
applying a second base coating composition on said cured film without sanding the cured film,
applying a second clear coating composition thereon without curing the second base coating composition, and then baking to cure simultaneously the second base coating composition and the second clear coating composition, wherein both said second base coating composition and a first base coating composition which forms said first base coat layer comprise:

(A) a film-forming resin,
(B) a crosslinking agent for thermosetting the resin (A), and
(C) a phosphate, a sulfonic acid or a carboxylic acid having a long-chain alkyl group of 8 to 18 carbon atoms and a HLB of 3 to 12,

wherein the solid content of the component (C) is 0.1 to 5% by weight based on a total solid content of the components (A) and (B).

Further, the present invention also provides a multi-layer coating composite obtained by the above process.

## DETAILED DESCRIPTION OF THE INVENTION

The film-forming resin used in the present invention is not specifically limited, and there can be used resins which are normally used for a thermosetting coating composition. Examples thereof include acrylic resin, polyester resin, alkyd resin, epoxy resin, urethane resin or a mixture thereof. A solvent used for the coating composition of the present invention may be an aqueous solvent or an organic solvent. In the case of the aqueous solvent, a water-solubilizable group (e.g. carboxyl or amino group) is incorporated in the film-forming resin and the resin is neutralized with a neutralizing agent, whereby, the resin can be dissolved or dispersed in water. As the preferred resin, for example, there are acrylic resin, polyester resin and the like. Particularly preferred one is an acrylic resin prepared from 5 to 40 % by weight of amide group-containing ethylenic monomers (e.g. (meth)acrylamide, N-butyl acrylamide), acid group containing ethylenic monomers (e.g. (meth)acrylic acid, maleic acid and itaconic acid) and other ethylenic monomers (e.g. (meth)acrylates, such as methyl (meth)acrylate, butyl (meth)acrylate and 2-hydroxyethyl (meth)acrylate; acrylonitriles; aromatic vinyl monomers, such as styrene). In general, the resin preferably has an hydroxyl value of 20 to 200, more preferably 30 to 150. A hydroxyl group is considered to be a reaction site with a crosslinking agent. Further, the film-forming resin preferably has a number-average molecular weight of 1,000 to 50,000, more preferably 1,000 to 20,000.

The crosslinking agent of the component (B) is required for thermosetting the film-forming resin (A). Examples thereof include blocked polyisocyanate compounds, alkoxylated melamine-aldehyde condensates (melamine-folmaldehyde), alkoxylated compounds of a condensate with paraformaldehyde (e.g. methoxymethylolmelamine, isobutoxylated methylolomelamine, n-butoxylated methylolmelamine, etc.), alicyclic, aromatic or aliphatic epoxy compounds containing at least two epoxy groups [e.g. Epicoat 828, Epicoat 1001, Epicoat 1004 (manufactured by Shell Chemical Co.), Epolite 40E, Epolite 400E, Epolite No.1600, Eplite No.721 (manufactured by Kyosei Yushi Co.), etc.] and the like. At least one sort of them may be used.

The component (C) used in the present invention is phosphate, sulfonic acid or carboxylic acid having a long-chain

alkyl group of 8 to 18 carbon atoms and HLB of 3 to 12. The number of carbon atom is 8 to 18. When it is smaller than 8, wettabiliy to the coating layer is deteriorated, which results in inferior intercoat adhesion. When it exceeds 18, the component (C) is crystalized in the coating composition and it is not preferred. More preferably, the number of carbon atom is 10 to 14, whereby, wettability becomes good and intercoat adhesion is improved. HLB of the compound is represented by Gliffin equation:

$$HLB = 20\ (M_H/M)$$

wherein $M_H$ is the molecular weight of the hydrophilic part and M is a molecular weight of an activator. A molecular weight of the following phosphate, sulfonic acid or carboxylic acid is used as the molecular weight of the hydrophilic group part. HLB is 3 to 12, preferably 4 to 8. When HLB is not in this range, wettability is impaired. The compound C is a compound represented by the formula:

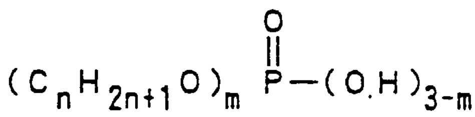

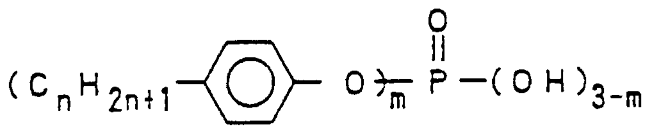

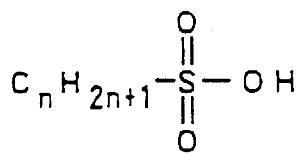

or

$$C_nH_{2n+1}\ COOH$$

wherein n is an integer of 8 to 18 and m is 1 or 2, or a salt thereof. More preferred compounds are 2-ethylhexyl acid phosphate, mono- or di-isodecyl acid phosphate, monoor di-tridecyl acid phosphate, mono- or di-lauryl acid phosphate, mono- or di-nonylphenyl acid phosphate, lauryl sulfuric acid, nonyl sulfuric acid, stearic acid, lauric acid and the like.

The above component may be formulated as the clear coat composition or it may be formulated with pigments to form a paint. Any kind of pigments, for example, color pigments, extender pigments, metallic pigments, mica particles and the like may be normally used. Examples of the color pigment include carbon black, acetylene black, chrome yellow, cadmium yellow, yellow iron oxide, mineral fast yellow, naveles yellow, benzidine yellow, molybdate orange, permanent orange GTR, red iron oxide, cadmium red, resol red, permanent red 4R, fast violet B, methyl violet lake, metallic phthalocyanine blue, fast sky blue, chrome green, chrome oxide, titanium oxide and the like. Examples of the extender pigment include barium carbonate, clay, silica, talc and the like. As the metallic pigment, aluminum flake is normally used. Examples of the mica particles include one wherein mica particles are encapsulated or coated with metallic oxide, typically iron oxide or titanium oxide.

The solid content of the component B is 5 to 60 % by weight, preferably 20 to 40 % by weight, based on the total weight of the components A and B. When the solid content of the crosslinking agent (component B) is smaller than 5 % by weight, the resin is not completely cured, which results in deterioration of water resistance. Further, when it exceeds 60 % by weight, stabilizing of the coating composition is deteriorated. The solid content of the component C is 0.1 to 5 % by weight, preferably 0.5 to 2 % by weight, based on the total solid content of the components A and B. When the solid content of the component C is 0.1 % by weight, adhesion as the effect of the present invention is

deteriorated. On the contrary, when it exceeds 5 % by weight, water resistance is deteriorated.

In addition to the above components, conventional additives, for example, surface modifier, viscosity inhibitor (e. g. water-insoluble particle, etc.), thickner, antioxidant, UV inhibitor, antifoamer and the like may be formulated. The amount thereof is known to the art.

It is considered that, when the composition for use in the present invention is applied on a coating layer, the long chain alkyl groups of the component (C) are oriented on on the surface of the under coating layer to improve wettability of the hydrophobic coating layer, whereby, intercoat adhesion with the under coating layer is improved.

The preparation of the coating composition is not specifically limited, but the component C is normally added after the components A and B are sufficiently mixed. The composition of the present invention is diluted with an organic solvent or an aqueous solvent to make a solution having suitable viscosity which is coated by spray coating, dip coating, brush coating and the like, and then the coated article is dried at 100 to 200°C for 10 to 60 minutes.

The coating composition for use in the present invention is particularly superior as a top coating composition of automobiles and is extremely useful for a base coating composition of a "two coat-one bake coating system" for automobiles. If surface defects occur in the "two coat-one bake coating system" comprising applying a base coating composition containing a pigment, applying a clear coating composition thereon without baking and drying and then baking and drying, sufficient adhesion can not be obtained between a first base clear coat and a second base clear coat when a conventional base paint is applied without sanding surface defects, followed by application of a clear coating composition, baking and further drying. However, sufficient adhesion can be obtained by using the process of the present invention.

In the process of the present invention, adhesion with an under coating layer (no quality of the under coating layer may be considered) is remarkably improved and high intercoat adhesion can be obtained without sanding treatment of the under coating layer.

Further, when two coat-one bake must be conducted again because surface defects occur in the "two coat-one bake coating", extremely excellent adhesion can be obtained without sanding using the coating composition of the present invention as the second base coating composition.

## EXAMPLES

The following Production Examples, Examples and Comparative Examples further illustrate the present invention in detail but are not to be construed to limit the scope thereof. In the Production Examples, Examples and Comparative Examples, "parts" and "% s'" are by weight unless otherwise stated.

### Production Example 1

Synthesis 1 of acrylic resin

To a 2 liter reaction vessel equipped with a stirrer, a thermostat and a condenser, methoxypropanol (76 parts) was charged and heated to 120°C. Then, a monomer solution of styrene (15 parts), methyl methacrylate (63 parts), 2-hydroxyethyl methacrylate (48 parts), N-butyl acrylate (117 parts), methacrylic acid (27 parts), acrylamide (30 parts), methoxypropanol (60 parts) and t-butylperoxy-2-ethylhexanoate (3 parts) was further added dropwise over 3 hours and stirred continuously for one hour. Further, dimethylethanolamine (28 parts) and deionized water (536 parts) were added to obtain an acrylic resin having a volatile content of 30 % and a number-average molecular weight of 12000. This resin had a hydroxyl value of 70 and an acid value of 58.

### Production Example 2 (for pigment paste)

Synthesis 2 of acrylic resin

According to the same manner as that described in Production Example 1 except for using a monomer solution of styrene (24 parts), methyl methacrylate (73 parts), 2-hydroxyethyl methacrylate (48 parts), N-butyl acrylate (117 parts), methacrylic acid (18 parts), acrylamide (20 parts), methoxypropanol (40 parts) and t-butylperoxy-2-ethylhexanoate (3 parts), a copolymer was synthesized. Further, dimethylethanolamine (19 parts) and deionized water (565 parts) were added to obtain an acrylic resin having a volatile content of 30 % and a number-average molecular weight of 12000. This resin had a hydroxyl value of 70 and an acid value of 40.

Production Example 3

Synthesis 3 of acrylic resin

To the same reaction vessel as that used in Production Example 1, xylene (350 parts) was charged and heated to 130°C. Then, a monomer initiator solution of glycidyl methacrylate (250 parts), styrene (25 parts), methyl methacrylate (60 parts), N-butyl methacrylate (165 parts) and t-butylperoxy-2-ethylhexanoate (50 parts) was further added dropwise over 3 hours and stirred continuously for 2 hour to obtain an epoxy group-containing acrylic resin having a volatile content of 55 % and a number-average molecular weight of 2500.

Production Example 4

Synthesis of polyester resin

To a 2 liter reaction vessel equipped with a stirrer, a thermostat and a condenser, bishydroxyethyl taurin (67 parts), neopentyl glycol (65 parts), azelaic acid (118 parts), phthalic anhydride (93 parts) and xylene (27 parts) were charged and heated. Water produced by the reaction was removed by azeotropy with xylene.

The reaction mixture was heated to 190°C over about 2 hours after the beginning of reflux and stirring and dehydration were continuously conducted until an acid value (corresponding to carboxylic acid) became 72.5, and then cooled to 140°C. With maintaining at 140°C, Cardula E10 (manufactured by Shell Co.) (157 parts) was added dropwise over 30 minutes and stirred continuously for 2 hours to complete the reaction. Furthermore, dimethylethanolamine (47 parts) and deionized water (1100 parts) were added. The resulting polyester resin had an acid value of 59, a hydroxyl value of 90, a volatile content of 30 % and a number-average molecular weight of 1054.

Production Example 5

Synthesis of acrylic resin

To the same reaction vessel as that used in Production Example 1, xylene (700 parts) was charged and heated to 130°C. Then, a monomer initiator solution of styrene (200 parts), 2-ethylhexyl acrylate (200 parts), hydroxyethyl methacrylate (90 parts), methacrylic acid (10 parts), methyl methacrylate (100 parts) and t-butylperoxy-2-ethylhexanoate (36 parts) was further added dropwise over 3 hours and stirred continuously for 2 hour to obtain an acrylic resin having a volatile content of 45 %, a number-average molecular weight of 5600 and an acid value of 10.

Production Example 6

Synthesis of acrylic resin

To the same reaction vessel as that used in Production Example 1, butyl acetate (700 parts) was charged and heated to 130°C. Then, a monomer initiator solution of styrene (200 parts), n-butyl acrylate (200 parts), 2hydroxyethyl methacrylate (90 parts), methacrylic acid (10 parts), methyl methacrylate (100 parts) and t-butylperoxy-2ethylhexanoate (36 parts) was further added dropwise over 3 hours and stirred continuously for 2 hours to obtain an acrylic resin having a volatile content of 45 %, a number-average molecular weight of 8000 and an acid value of 10.

Production Example 7

Synthesis of acrylic resin

To the same reaction vessel as that used in Production Example 1, xylene (350 parts) and methoxypropanol (350 parts) were charged and heated to 130°C. Then, a monomer initiator solution of styrene (160 parts), 2ethylhexyl acrylate (200 parts), hydroxyethyl methacrylate (90 parts), methacrylic acid (50 parts), methyl methacrylate (100 parts) and t-butylperoxy-2-ethylhexanoate (36 parts) was further added dropwise over 3 hours and stirred continuously for 2 hour to obtain an acrylic resin having a volatile content of 45 %, a number-average molecular weight of 5600 and an acid value of 50.

Production Example 8

Preparation 1 of pigment-dispersed paste

Acrylic resin prepared in Production Example 2 (54 parts), M-1100 manufactured by Cablack Co. (12 parts) and deionized water (18 parts) were subjected to mill dispersion for 3 hours to obtain a pigment paste.

Production Example 9

Preparation 2 of pigment-dispersed paste

Acrylic resin prepared in Production Example 6 (100 parts) and Maloon R-6424 manufactured by Harmon Co. (15 parts) were subjected to mill dispersion similarly to obtain a pigment paste.

Example 1

Preparation 1 of aqueous metallic coating composition

The acrylic resin of Production Example 1 (170 parts), C-303 manufactured by Mitsui Toatsu Chemicals (methylated melamine, solid content: 100 %, 21 parts), aluminum paste (Alpaste 7160N) manufactured by Toyo Aluminum Co. (16.3 parts) and a 50 % xylene solution of lauryl acid phosphate (HLB: 7.3) (1.6 parts) were mixed with stirring by a stirrer.

A top coating composition obtained was diluted with deionized water and viscosity was adjusted to 30 seconds at 20°C using Ford cup #4 to obtain an aqueous metallic coating composition.

Example 2

Preparation 2 of aqueous coating composition

The acrylic resin of Production Example 1 (170 parts), C-303 manufactured by Mitsui Toatsu Chemicals (methylated melamine solid content: 100 %, 30 parts), pigment paste M-100 of Production Example 8 (30 parts) and a 50 % xylene solution of stearyl acid phosphate (HLB : 5.5) (2.5 parts) were mixed with stirring by a stirrer.

A top coating composition obtained was diluted with deionized water and viscosity was adjusted to 30 seconds at 20°C using Ford cup #4 to obtain an aqueous coating composition.

Example 3

Preparation 3 of solvent base coating composition

The acrylic resin of Production Example 6 (150 parts), U-20N-60 manufactured by Mitsui Toatsu Chemicals Co. (butylated melamine), Brightcopper manufactured by Marl Co. (mica, 17 parts), pigment paste Pelindmaloon of Production Example 9 (18 parts) and a 50 % xylene solution of isostearyl acid phosphate (HLB: 5.5) (3.2 parts) were mixed with stirring by a stirrer.

An acrylmelamine base coating composition obtained was diluted with a mixture of ethyl acetate and xylene (1:1) and viscosity was adjusted to 30 seconds at 25°C using Ford cup #4 to obtain an acrylmelamine based coating composition.

Example 4

Preparation 4 of aqueous coating composition

The polyester resin of Production Example 4 (180 parts), C-303 manufactured by Mitsui Toatsu Chemicals Co. (methylated melamine solid content: 100 %, 25 parts), pigment paste M-1100 of Production Example 8 (16.3 parts) and a 50 % xylene solution of lauryl acid phosphate (HLB: 7.3) (2.5 parts) were mixed with stirring by a stirrer.

A top coating composition obtained was diluted with deionized water and viscosity was adjusted to 30 seconds at 20°C using Ford cup #4 to obtain an aqueous coating composition.

Example 5

Preparation 5 of aqueous metallic coating composition

The acrylic resin of Production Example 1 (170 parts), U-20N-60 manufactured by Mitsui Toatsu Chemicals (butylated melamine, 20 parts), a blocked isocyanate compound obtained by blocking isophorone diisocyanate with methyl ethyl ketone (10 parts), aluminum paste (Alpaste 60-600) manufactured by Toyo Aluminum Co. (16.3 parts) and a 50 % xylene solution of 2-ethylhexyl acid phosphate (HLB: 9.2) (2.4 parts) were mixed with stirring by a stirrer.

A top coating composition obtained was diluted with deionized water and viscosity was adjusted to 30 seconds at 20°C using Ford cup #4 to obtain an aqueous metallic coating composition.

Production Example 10

Preparation 1 of clear coating composition

The acrylic resin of Production Example 5 (80 parts) and U-20N-60 manufactured by Mitsui Toatsu Chemicals Co. (butylated melamine, 15 parts) were mixed with stirring by a stirrer.

A acrylmelamine based clear coating composition obtained was diluted with a mixture of Solvesso 100 and Solvesso 150 (1:1) and viscosity was adjusted at 20°C for 22 seconds using Ford cup #4 to obtain an acrylmelamine based clear coating composition.

Production Example 11

Preparation 3 of clear coating composition

The acrylic resin of Production Example 7 (500 parts), epoxy group-containing resin of Production Example 3 (100 parts) and a 20 % ethanol solution of tetrabutylammonium bromide (7 parts) were mixed with stirring by a stirrer.

An acid epoxy curable based clear coating composition obtained was diluted with a mixture of Solvesso 100 and Solvesso 150 (1:1) and viscosity was adjusted at 20°C for 22 seconds using Ford cup #4 to obtain an acid epoxy based clear coating composition.

Production Example 12

Preparation 4 of clear coating composition

The acrylic resin of Production Example 5 (50 parts), C-303 manufactured by Mitsui Toatsu Chemicals Co. (methylated melamine solid content: 100%, 20 parts), a blocked isocyanate compound obtained by blocking isophorone diisocyanate with methyl ethyl ketone (20 parts) and a 5 % xylene solution of dibutyltin dilaurate (0.6 parts) were mixed with stirring by a stirrer.

An acryl-melamine-isocyanate based clear coating composition obtained was diluted with Solvesso 150 and viscosity was adjusted at 20°C for 22 seconds using Ford cup #4 to obtain an acryl-melamine-isocyanate based clear coating composition.

Comparative Example 1

According to the same manner as that described in Example 1 except for adding ethyl acid phosphate (HLB value: 15.4) in place of lauryl acid phosphate, an aqueous metallic coating composition was obtained.

Comparative Example 2

According to the same manner as that described in Example 1 except for adding laurylpolyoxyethyl acid phosphate [HLB value of 12.1 (n=4) and HLB value of 13.5 (n=6)] in place of lauryl acid phosphate, an aqueous coating composition was obtained.

Comparative Example 3

According to the same manner as that described in Example 1 except for adding a reaction product of bisphenol A type epoxy resin having a molecular weight of 400 with phosphoric acid in place of lauryl acid phosphate, an aqueous

coating composition was obtained.

Comparative Example 4

According to the same manner as that described in Example 1 except for adding a 50 % xylene solution of lauryl acid phosphate (0.16 parts), an aqueous coating composition was obtained.

Comparative Example 5

According to the same manner as that described in Example 1 except for adding a 50 % xylene solution of lauryl acid phosphate (16 parts), an aqueous coating composition was obtained.

Example 6

Coat forming method ("two coat-one bake" method)

A coating composition obtained in Example 1 was air sprayed on a intercoated steel plate which is not subjected to sanding such that a thickness of a dry coat became 15 μ. After setting for 5 minutes, the coated plate was preheated at 80°C for 5 minutes and a coating composition obtained in Production Examples 10 to 12 was air sprayed such that a thickness of a dry coat became 40 μ. After setting for 7 minutes, the coated plate was dried at 140°C for 20 minutes. Adhesion of the obtained coat was evaluated. The combination of the base coat with the clear coat as well as the results of adhesion are shown in Table. 1.

Table 1

| Test plate | Base coating composition | Clear coating composition | Adhesion* |
|---|---|---|---|
| 1 | Example 1 | Production Example 10 | 100/100 |
| 2 | Example 2 | Production Example 10 | 100/100 |
| 3 | Example 3 | Production Example 10 | 100/100 |
| 4 | Example 4 | Production Example 11 | 100/100 |
| 5 | Example 5 | Production Example 12 | 100/100 |
| 6 | Comp. Example 1 | Production Example 12 | 5/100 |
| 7 | Comp. Example 2 | Production Example 12 | 8/100 |
| 8 | Comp. Example 3 | Production Example 12 | 8/100 |
| 9 | Comp. Example 4 | Production Example 12 | 10/100 |
| 10 | Comp. Example 5 | Production Example 12 | 10/100 |

*: A test plate was cut at an interval of 2 mm to form 100 cuts of 2 $mm^2$ and a peel test was conducted using a tape. The numerical value means the number of a non-peeled cut per 100 cuts.

Example 7

Coat forming method

A base coating composition prepared in Examples 1 to 5 and Comparative Examples 1 to 5 was applied on an intercoated steel plate such that a thickness of a dry coat became 15 μ. After setting for 5 minutes and preheating at 80°C for 5 minutes, a clear coating composition of Production Examples 10 to 12 was applied on the coated plate such that a thickness of a dry coat became 40 μ, followed by setting for 10 minutes. The coated plate was baked at 160°C for 18 minutes by a drier to make a test plate.

The test plate was recoated with the same base coating composition and clear coating composition without sanding and baked at 140°C for 18 minutes to form a two coat-one bake coat consists of 4 layers. Recoat adhesion of the coat was evaluated. The combination of the base coating composition with the clear coating composition as well as the

results of recoat adhesion are shown in Table 2.

Table 2

| Test plate | Base coating composition | Clear coating composition | Recoat adhesion* |
|---|---|---|---|
| 1 | Example 1 | Production Example 10 | 100/100 |
| 2 | Example 2 | Production Example 10 | 90/100 |
| 3 | Example 3 | Production Example 10 | 90/100 |
| 4 | Example 4 | Production Example 11 | 98/100 |
| 5 | Example 5 | Production Example 12 | 95/100 |
| 6 | Comp. Example 1 | Production Example 12 | 5/100 |
| 7 | Comp. Example 2 | Production Example 12 | 5/100 |
| 8 | Comp. Example 3 | Production Example 12 | 8/100 |
| 9 | Comp. Example 4 | Production Example 12 | 15/100 |
| 10 | Comp. Example 5 | Production Example 12 | 12/100 |

## Claims

1. A process for forming a coating composite on a substrate comprising the steps of:

forming on the substrate a cured film composed of a first base coat layer and a first clear coat layer formed

on the first base coat layer,
applying a second base coating composition on said cured film without sanding the cured film,
applying a second clear coating composition thereon without curing the second base coating composition, and then baking to cure simultaneously the second base coating composition and the second clear coating composition,
wherein both said second base coating composition and a first base coating composition which forms said first base coat layer comprise:

(A) a film-forming resin,
(B) a crosslinking agent for thermosetting the resin (A), and
(C) a phosphate, a sulfonic acid or a carboxylic acid having a long-chain alkyl group of 8 to 18 carbon atoms and a HLB of 3 to 12,

wherein the solid content of the component (C) is 0.1 to 5% by weight based on a total solid content of the components (A) and (B).

**2.** A process according to Claim 1, wherein said film-forming resin (A) is an aqueous resin containing an amide group.

**3.** A process according to Claim 1 wherein said film-forming resin (A) is an acryl resin prepared by polymerizing 5 to 40% by weight of amide group-containing ethylenic monomers, 3 to 25% by weight of acid group-containing ethylenic monomers and other copolymerizable ethylenic monomers.

**4.** A process according to any preceding Claim, wherein said component (C) is a phosphate having a long-chain alkyl group of 8 to 18 carbon atoms and HLB of 3 to 12.

**5.** A multi-layer coating composite obtained by the process according to any preceding Claim.

**Patentansprüche**

**1.** Verfahren zur Herstellung eines Schichtverbundes auf einem Substrat, dadurch gekennzeichnet, daß es die Stufen umfaßt:

Ausbilden eines gehärteten Films aus einer ersten Grundanstrichschicht und einer auf der ersten Grundanstrichschicht ausgebildeten ersten Klarlackschicht,
Applizieren einer zweiten Grundanstrichzusammensetzung auf dem gehärteten Film ohne Anschleifen des gehärteten Films,
Applizieren einer zweiten Klarlackzusammensetzung darauf ohne Härten der zweiten Grundanstrichzusammensetzung, und dann
Einbrennen, um die zweite Grundanstrichzusammensetzung und die zweite Klarlackzusammensetzung gleichzeitig zu härten,
wobei die zweite Grundanstrichzusammensetzung und die erste Grundanstrichzusammensetzung, die die erste Grundanstrichschicht bildet, umfassen:

(A) ein filmbildendes Harz,
(B) ein Vernetzungsmittel zum Hitzehärten des Harzes (A), und
(C) ein Phosphat, eine Sulfonsäure oder eine Carbonsäure mit einer langkettigen Alkylgruppe mit 8 bis 18 Kohlenstoffatomen und einer HLB von 3 bis 12,

und worin der Feststoffgehalt der Komponente (C) 0,1 bis 5 Gew.-%, bezogen auf den gesamten Feststoffgehalt der Komponenten (A) und (B), beträgt.

**2.** Verfahren nach Anspruch 1, dadurch gekennzeichnet, daß das filmbildende Harz (A) ein wässeriges Harz (Aqueous Resin) ist, das eine Amidgruppe enthält.

**3.** Verfahren nach Anspruch 1, dadurch gekennzeichnet, daß das filmbildende Harz (A) ein durch Polymerisieren von 5 bis 40 Gew.-% Amidgruppen-enthaltenden Ethylenmonomeren, 3 bis 25 Gew.-% Säuregruppen-enthaltenden Ethylenmonomeren und anderen copolymerisierbaren Ethylenmonomeren hergestelltes Acrylharz ist.

4. Verfahren nach einem der vorhergehenden Ansprüche, dadurch gekennzeichnet, daß die Komponente (C) ein Phosphat mit einer langkettigen Alkylgruppe mit 8 bis 18 Kohlenstoffatomen und einer HLB von 3 bis 12 ist.

5. Mehrschichtiger Schichtverbund, erhalten nach dem Verfahren nach einem der vorhergehenden Ansprüche.

**Revendications**

1. Procédé pour former un revêtement composite sur un substrat, comprenant les étapes consistant :

   à former sur le substrat un film durci composé d'une première couche de revêtement de base et d'une première couche de revêtement transparente formée sur la première couche revêtement de base,
   à appliquer une seconde composition de revêtement de base sur ledit film durci sans sabler le film durci,
   à appliquer une seconde composition de revêtement transparente sur celle-ci sans durcir la seconde composition de revêtement de base, et ensuite
   à cuire pour durcir simultanément la seconde composition de revêtement de base et la seconde composition de revêtement transparente,
   dans lequel à la fois ladite seconde composition de revêtement de base et la première composition de revêtement de base forment ladite première couche de revêtement de base comprennent toutes deux :

   (A) une résine filmogène,
   (B) un agent de réticulation pour thermodurcir la résine (A), et
   (C) un phosphate, un acide sulfonique ou un acide carboxylique ayant un groupe alkyle à longue chaîne de 8 à 18 atomes de carbone et une balance hydrophile-lipophile (HLB) de 3 à 12,

   dans lequel la teneur en matières solides du constituant (C) est de 0,1 à 5 % en poids sur la base de la teneur totale en matières solides des constituants (A) et (B).

2. Procédé selon la revendication 1, dans lequel ladite résine filmogène (A) est une résine aqueuse contenant un groupe amide.

3. Procédé selon la revendication 1, dans lequel ladite résine filmogène (A) est une résine acrylique préparée en polymérisant 5 à 40 % en poids de monomères éthyléniques contenant un groupe amide, 3 à 25 % en poids de monomères éthyléniques contenant un groupe acide et d'autres monomères éthyléniques copolymérisables.

4. Procédé selon l'une quelconque des revendications précédentes, dans lequel ledit constituant (C) est un phosphate ayant un groupe alkyle à longue chaîne de 8 à 18 atomes de carbone et une HLB de 3 à 12.

5. Revêtement composite multicouche obtenu par le procédé selon l'une quelconque des revendications précédentes.

Fig. 1

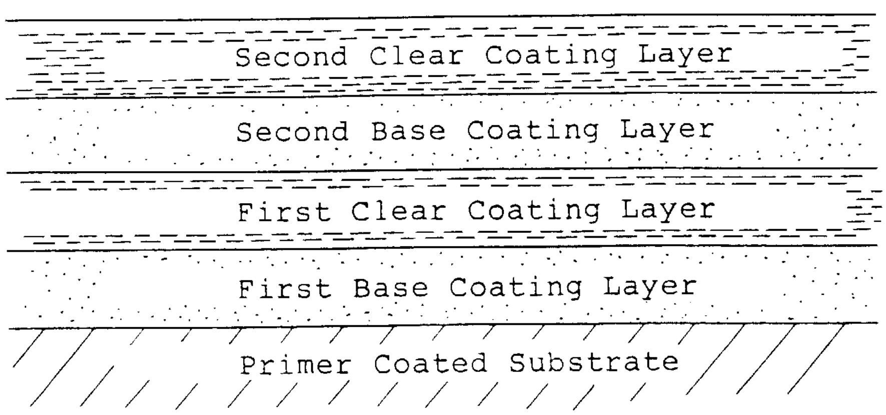
Second Clear Coating Layer
Second Base Coating Layer
First Clear Coating Layer
First Base Coating Layer
Primer Coated Substrate